# EUROPÄISCHE PATENTANMELDUNG

(11) **EP 2 336 220 A1**
(43) Veröffentlichungstag der Anmeldung: **22.06.2011**
(21) Anmeldenummer: 09179656.5
(22) Anmeldetag: 17.12.2009
(51) Int. Cl.: C08G 65/00

(54) **Verbesserte Blends aus Polyarylenethern und Polyarylensulfiden**

(71) Anmelder: BASF SE, 67056 Ludwigshafen (DE)
(72) Erfinder: Die Erfindernennung liegt noch nicht vor

(57) **Zusammenfassung**

Die vorliegende Erfindung betrifft thermoplastische Formmassen enthaltend folgende Komponenten:
(A) mindestens einen Polyarylenether,
(B) mindestens ein Polyarylensulfid,
(C) optional mindestens einen funktionalisierten Polyarylenether umfassend Carboxylgruppen,
(D) mindestens einen faser- oder teilchenförmigen Füllstoff und
(E) optional weitere Zusatzstoffe und/oder Verarbeitungshilfsmittel,

wobei das Verhältnis der scheinbaren Viskosität der Komponente (A) zu dem der Komponente (B) bestimmt bei 350°C und einer Scherrate von 1150 s⁻¹ von 2,5 bis 3,7 beträgt.

## Beschreibung

Die vorliegende Erfindung betrifft thermoplastische Formmassen enthaltend folgende Komponenten:
(A) mindestens einen Polyarylenether,
(B) mindestens ein Polyarylensulfid,
(C) optional mindestens einen funktionalisierten Polyarylenether umfassend Carboxylgruppen,
(D) mindestens einen faser- oder teilchenförmigen Füllstoff und
(E) optional weitere Zusatzstoffe und/oder Verarbeitungshilfsmittel,
wobei das Verhältnis der scheinbaren Viskosität der Komponente (A) zu dem der Komponente (B) bestimmt bei 350°C und einer Scherrate von 1150 s⁻¹ von 2,5 bis 3,7 beträgt.

Darüber hinaus betrifft die vorliegende Erfindung ein Verfahren zur Herstellung der erfindungsgemäßen thermoplastischen Formmassen sowie die Verwendung der erfindungsgemäßen thermoplastischen Formmassen zur Herstellung von Formteilen.

Polyarylenether gehören zur Gruppe der Hochleistungsthermoplaste und finden aufgrund ihrer hohen Wärmeform- und Chemikalienbeständigkeit Verwendung in hoch beanspruchten Anwendungen. Polyarylenether sind amorph und weisen daher oft eine unzureichende Beständigkeit gegenüber aggressiven Medien auf. Weiterhin weisen Polyarylenether auch eine hohe Schmelzeviskosität auf, was besonders die Verarbeitung zu großen Formteilen mittels Spritzguss beeinträchtigt. Die hohe Schmelzeviskosität ist insbesondere nachteilig bei der Herstellung von Formmassen mit hoher Füllstoff- oder Faserbeladung.

Aus der EP-A 673 973 ist bekannt, dass Polymermischungen aus Polyarylenethern und Polyphenylensulfid eine verbesserte Fließfähigkeit und eine gute Chemikalienbeständigkeit aufweisen.

Aus der EP-A 855 428 sind kautschukhaltige Polyarylenether bekannt, welche Carboxylgruppen-haltige funktionalisierte Polyarylenether zur Verbesserung der Zähigkeit und der Chemikalienbeständigkeit enthalten.

Gegenstand der EP-A 903 376 sind thermoplastische Formmassen enthaltend Polyarylenether, Polyarylensulfid und Kautschuk, welche ebenfalls zusätzlich funktionalisierte Polyarylenether enthalten. Die in der EP-A 903 376 verwendeten funktionalisierten Polyarylenether sind jedoch hinsichtlich ihrer Eignung für verstärkte Formmassen oft unzureichend.

Die aus dem Stand der Technik bekannten gefüllten, insbesondere faserverstärkten, thermoplastischen Formmassen auf Basis von Polyarylenethern und Polyarylensulfiden weisen oft unzureichende mechanische Eigenschaften, insbesondere eine unzureichende Schlagzähigkeit und Reißfestigkeit auf. Außerdem ist die Chemikalienbeständigkeit der bekannten Formmassen oft unzureichend.

Die Aufgabe der vorliegenden Erfindung bestand demzufolge darin, thermoplastische Formmassen auf Basis von Polyarylenethern mit guter Verarbeitbarkeit bereitzustellen, welche die vorgenannten Nachteile nicht oder in geringerem Umfang aufweisen. Insbesondere sollten die thermoplastischen Formmassen eine gute Verarbeitbarkeit, insbesondere gute Fließfähigkeit, bei gleichzeitig guten mechanischen Eigenschaften, insbesondere eine hohe Zähigkeit, eine hohe Schlagzähigkeit und eine hohe Reißfestigkeit aufweisen. Die thermoplastischen Formmassen sollten darüber hinaus eine hohe Chemikalienbeständigkeit aufweisen.

Die vorgenannten Aufgaben werden gelöst durch die erfindungsgemäßen thermoplastischen Formmassen. Bevorzugte Ausführungsformen sind den Ansprüchen und der nachfolgenden Beschreibung zu entnehmen. Kombinationen bevorzugter Ausführungsformen verlassen den Rahmen der vorliegenden Erfindung nicht.

Die erfindungsgemäßen thermoplastischen Formmassen enthalten folgende Komponenten:
(A) mindestens einen Polyarylenether,
(B) mindestens ein Polyarylensulfid,
(C) optional mindestens einen funktionalisierten Polyarylenether umfassend Carboxylgruppen,
(D) mindestens einen faser- oder teilchenförmigen Füllstoff und
(E) optional weitere Zusatzstoffe und/oder Verarbeitungshilfsmittel,
wobei das Verhältnis der scheinbaren Viskosität der Komponente (A) zu dem der Komponente (B) bestimmt bei 350°C und einer Scherrate von 1150 s⁻¹ von 2,5 bis 3,7, vorzugsweise von 2,6 bis 3,5, besonders bevorzugt von 2,7 bis 3,3 beträgt.

Die scheinbare Viskosität wird im Rahmen der vorliegenden Erfindung grundsätzlich bei 350°C und einer Scherrate von 1150 s⁻¹ mit einem Kapillarviskosimeter mit einer Kreiskapillare der Länge 30 mm, einem Radius von 0,5 mm, einem Einlaufwinkel der Düse von 180°, einem Durchmesser des Reservoirgefäßes der Schmelze von 12 mm und mit einer Vorheizzeit von 5 Minuten bestimmt.

Die erfindungsgemäßen thermoplastischen Formmassen enthalten dabei vorzugsweise von 15 bis 80 Gew.-% der Komponente (A), von 5 bis 70 Gew.-% der Komponente (B), von 0 bis 15 Gew.-% der Komponente (C), von 15 bis 70 Gew.-% der Komponente (D) und von 0 bis 40 Gew.-% der Komponente (E), wobei die Summe der Gew.-% der Komponenten (A) bis (E) 100 Gew.-% beträgt.

Die erfindungsgemäßen thermoplastischen Formmassen enthalten besonders bevorzugt von 15 bis 65 Gew.-% der Komponente (A), von 10 bis 55 Gew.-% der Komponente (B), von 0 bis 10 Gew.-% der Komponente (C), von 25 bis 60 Gew.-% der Komponente (D) und von 0 bis 30 Gew.-% der Komponente (E), wobei die Summe der Gew.-% der Komponenten (A) bis (E) 100 Gew.-% beträgt.

Die erfindungsgemäßen thermoplastischen Formmassen enthalten ganz besonders bevorzugt von 20 bis 54 Gew.-% der Komponente (A), von 15 bis 49 Gew.-% der Komponente (B), von 1 bis 10 Gew.-% der Komponente (C), von 30 bis 60 Gew.-% der Komponente (D) und von 0 bis 30 Gew.-% der Komponente (E), wobei die Summe der Gew.-% der Komponenten (A) bis (E) 100 Gew.-% beträgt.

Die einzelnen Komponenten werden im Folgenden näher erläutert.

### Komponente A

Polyarylenether sind dem Fachmann als Polymerklasse bekannt. Im Prinzip kommen alle dem Fachmann bekannten und/oder nach bekannten Methoden herstellbaren Polyarylenether als Bestandteil der Komponente (A) in Betracht.

Im Rahmen der Komponente (A) bevorzugte Polyarylenether sind aus Bausteinen der allgemeinen Formel I aufgebaut: 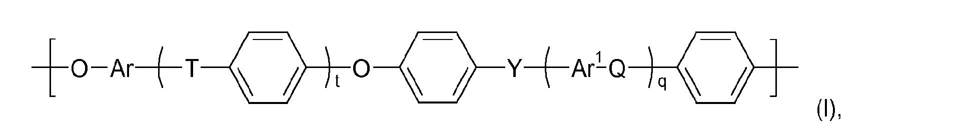 wobei die Symbole t, q, Q, T, Y, Ar und Ar¹ folgenden Bedeutungen aufweisen:
- t, q:: unabhängig voneinander 0, 1, 2 oder 3,
- Q, T, Y:: unabhängig voneinander jeweils eine chemische Bindung oder Gruppe, ausgewählt aus -O-, -S-, -SO₂-, S=O, C=O, -N=N- und -CR^{a}R^{b}-, wobei R^{a} und R^{b} unabhängig voneinander jeweils für ein Wasserstoffatom oder eine C₁-C₁₂-Alkyl-, C₁-C₁₂-Alkoxy- oder C₆-C₁₈-Arylgruppe stehen, und wobei wenigstens eines aus Q, T und Y für -SO₂- steht und

- Ar, Ar¹:: unabhängig voneinander eine Arylengruppe mit von 6 bis 18 Kohlenstoffatomen.

Falls Q, T oder Y unter den oben genannten Voraussetzungen eine chemischen Bindung ist, dann ist darunter zu verstehen, dass die links benachbarte und die rechts benachbarte Gruppe direkt miteinander über eine chemische Bindung verknüpft vorliegen.

Vorzugsweise werden Q, T und Y in Formel I allerdings unabhängig voneinander ausgewählt aus -O- und -SO₂-, mit der Maßgabe, dass wenigstens eines aus der Gruppe bestehend aus Q, T und Y für -SO₂- steht.

Sofern Q, T oder Y -CR^{a}R^{b}- sind, stehen R^{a} und R^{b} unabhängig voneinander jeweils für ein Wasserstoffatom oder eine C₁-C₁₂-Alkyl-, C₁-C₁₂-Alkoxy- oder C₆-C₁₈-Arylgruppe.

Bevorzugte C₁-C₁₂-Alkylgruppen umfassen lineare und verzweigte, gesättigte Alkylgruppen mit von 1 bis 12 Kohlenstoffatomen. Insbesondere sind folgende Reste zu nennen: C₁-C₆-Alkylrest, wie Methyl, Ethyl, n-Propyl, i-Propyl, n-Butyl, sek-Butyl, 2-oder 3-Methyl-pentyl und längerkettige Reste wie unverzweigtes Heptyl, Octyl, Nonyl, Decyl, Undecyl, Lauryl und die ein- oder mehrfach verzweigten Analoga davon.

Als Alkylreste in den vorgenannten einsetzbaren C₁-C₁₂-Alkoxygruppen kommen die weiter oben definierten Alkylgruppen mit von 1 bis 12 Kohlenstoffatomen in Betracht. Vorzugsweise verwendbare Cycloalkylreste umfassen insbesondere C₃-C₁₂-Cycloalkylreste, wie zum Beispiel Cyclopropyl, Cyclobutyl, Cyclopentyl, Cyclohexyl, Cycloheptyl, Cyclooctyl, Cyclopropylmethyl, Cyclopropylethyl, Cyclopropylpropyl, Cyclobutylmethyl, Cyclobutylethyl, Cyclpentylethyl, -propyl, -butyl, -pentyl, -hexyl, Cyclohexylmethyl, -dimethyl, und -trimethyl.

Ar und Ar¹ bedeuten unabhängig voneinander eine C₆-C₁₈-Arylengruppe. Ausgehend von den weiter unten beschriebenen Ausgangsprodukten ist Ar vorzugsweise abgeleitet von einer elektronenreichen, leicht elektrophil angreifbaren aromatischen Substanz, die bevorzugt aus der Gruppe bestehend aus Hydrochinon, Resorcin, Dihydroxynaphthalin, insbesondere 2,7-Dihydroxynaphthalin, und 4,4'-Bisphenol ausgewählt wird. Vorzugsweise ist Ar¹ eine unsubstituierte C₆- oder C₁₂-Arylengruppe.

Als C₆-C₁₈-Arylengruppen Ar und Ar¹ kommen insbesondere Phenylengruppen, wie 1,2-, 1,3- und 1,4-Phenylen, Naphthylengruppen, wie beispielsweise 1,6-, 1,7-, 2,6-und 2,7-Naphthylen, sowie die von Anthracen, Phenanthren und Naphthacen abgeleiteten Arylengruppen in Betracht.

Vorzugsweise werden Ar und Ar¹ in der bevorzugten Ausführungsform gemäß Formel I unabhängig voneinander ausgewählt aus der Gruppe bestehend aus 1,4-Phenylen, 1,3-Phenylen, Naphthylen, insbesondere 2,7-Dihydroxynaphthylen, und 4,4'-Bisphenylen.

Im Rahmen der Komponente (A) vorzugsweise vorliegende Bausteine sind solche, die mindestens eine der folgenden wiederkehrenden Struktureinheiten la bis lo enthalten:

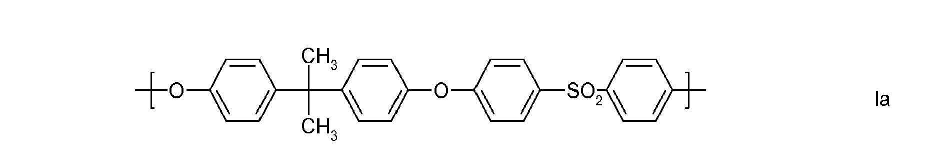

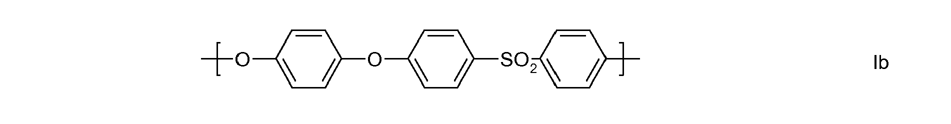

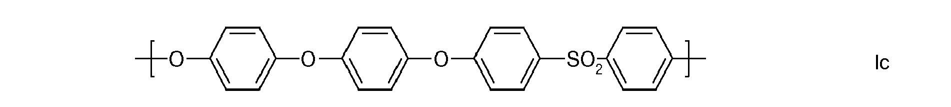

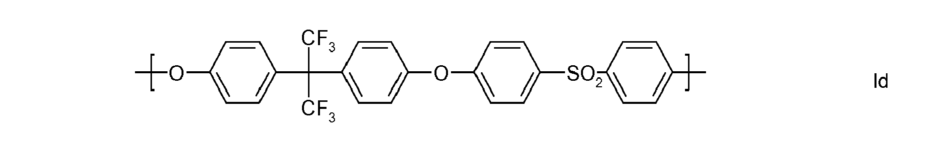

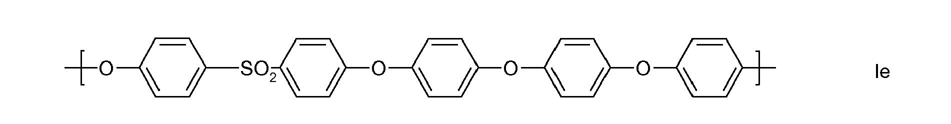

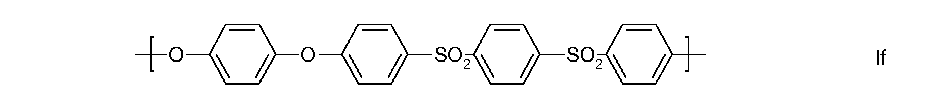

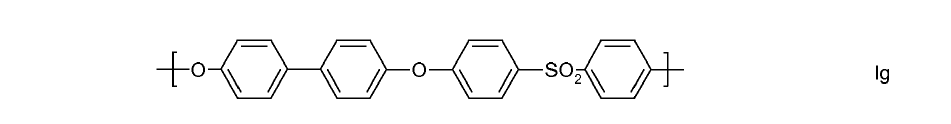

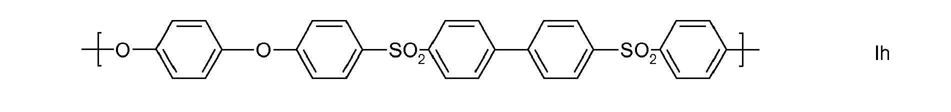

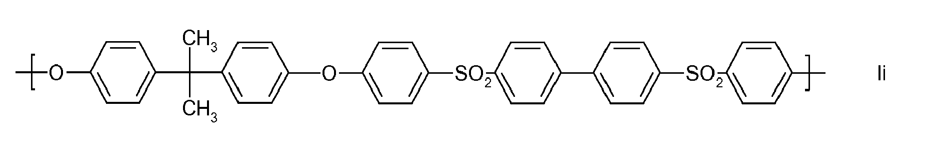

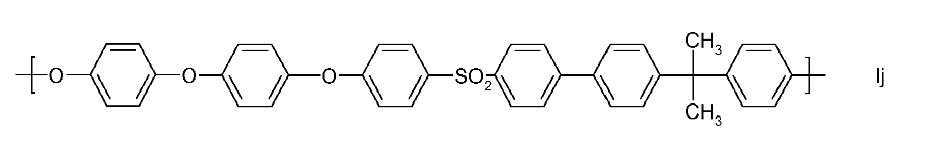

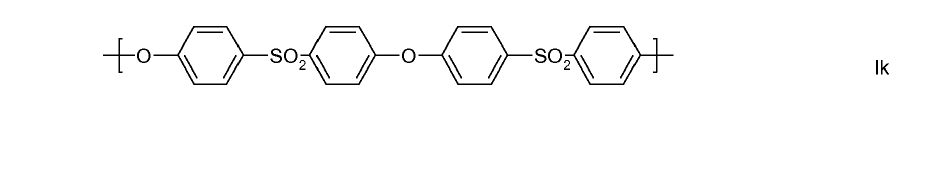

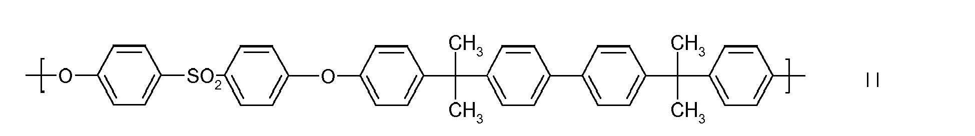

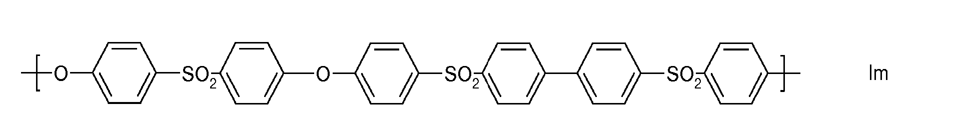

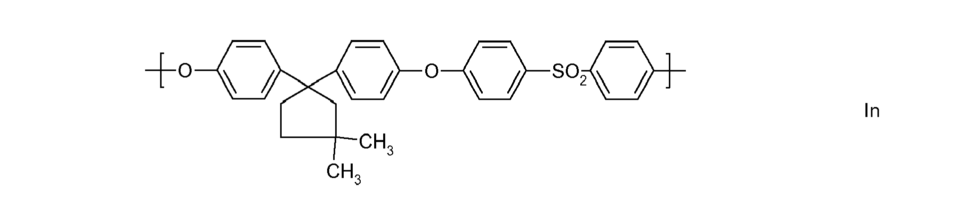

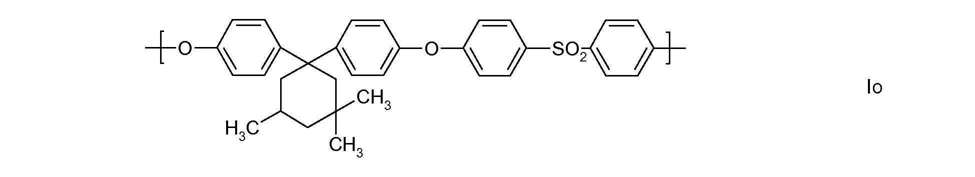

Zusätzlich zu den bevorzugt vorliegenden Bausteinen la bis lo sind auch solche Bausteine bevorzugt, in denen eine oder mehrere 1,4-Phenyleneinheiten, die von Hydrochinon abstammen, durch 1,3-Phenyleneinheiten, die von Resorcin abstammen- oder durch Naphthyleneinheiten, die von Dihydroxynaphthalin abstammen, ersetzt sind.

Als Bausteine der allgemeinen Formel I besonders bevorzugt sind die Bausteine la, lg und lk. Es ist außerdem besonders bevorzugt, wenn die Polyarylenether der Komponente (A) im Wesentlichen aus einer Sorte Bausteine der allgemeinen Formel I, insbesondere aus einem Baustein ausgewählt aus la, lg und lk aufgebaut sind.

In einer besonders bevorzugten Ausführungsform ist Ar = 1,4-Phenylen, t = 1, q = 0, T ist eine chemische Bindung und Y = SO₂. Aus der vorgenannten Wiederholungseinheit aufgebaute besonders bevorzugte Polyarylenethersulfone werden als Polyphenylensulfon (PPSU) bezeichnet.

In einer weiteren besonders bevorzugten Ausführungsform ist Ar = 1,4-Phenylen, t = 1, q = 0, T = C(CH₃)₂ und Y = SO₂. Aus der vorgenannten Wiederholungseinheit aufgebaute besonders bevorzugte Polyarylenethersulfone werden als Polysulfon (PSU) bezeichnet.

In einer weiteren besonders bevorzugten Ausführungsform ist Ar = 1,4-Phenylen, t = 1, q = 0, T = Y = SO₂. Aus der vorgenannten Wiederholungseinheit aufgebaute besonders bevorzugte Polyarylenethersulfone werden als Polyethersulfon (PESU) bezeichnet. Diese Ausführungsform ist ganz besonders bevorzugt.

Abkürzungen wie PPSU, PESU und PSU entsprechen im Rahmen der vorliegenden Erfindung der DIN EN ISO 1043-1:2001.

Im Allgemeinen weisen die bevorzugten Polyarylenether (A) mittlere Molekulargewichte Mₙ (Zahlenmittel) im Bereich von 5.000 bis 60.000 g/mol und relative Viskositäten von 0,20 bis 0,95 dl/g auf. Die relativen Viskositäten der Polyarylenether (A) werden in 1 gew.-%iger N-Methylpyrrolidon-Lösung bei 25 °C nach DIN EN ISO 1628-1 bestimmt, beziehungsweise, sofern ausnahmsweise in N-Methylpyrrolidon keine ausreichende Löslichkeit vorliegt, in Mischungen aus Phenol und Dichlorbenzol oder in 96-%iger Schwefelsäure.

Die Polyarylenether (A) der vorliegenden Erfindung weisen vorzugsweise gewichtsmittlere Molekulargewichte M_{w} von 10.000 bis 150.000 g/mol, insbesondere von 15.000 bis 120.000 g/mol, besonders bevorzugt von 18.000 bis 100.000 g/mol auf, bestimmt mittels Gelpermeationschromatographie im Lösungsmittel Dimethylacetamid gegen engverteiltes Polymethylmethacrylat als Standard.

Die scheinbare Viskosität der Komponente (A) beträgt bei 350°C und einer Scherrate von 1150 s⁻¹ vorzugsweise von 100 bis 500 Pa*s, insbesondere von 200 bis 400 Pa*s, besonders bevorzugt von 250 bis 350 Pa*s.

Herstellungsverfahren, die zu den vorgenannten Polyarylenethern führen, sind dem Fachmann bekannt und beispielsweise in Herman F. Mark, "Encyclopedia of Polymer Sciennce and Technology", third edition, Volume 4, 2003 auf den Seiten 2 bis 8 sowie in Hans R. Krichelsdorf, ,,Aromatic Polyethers" in: Handbook of Polymer Synthesis, second edition, 2005 auf den Seiten 427 bis 443 beschrieben.

Besonders bevorzugt ist die Umsetzung mindestens einer aromatischen Verbindung mit zwei Halogensubstituenten und mindestens einer aromatischen Verbindung mit zwei funktionellen Gruppen, die gegenüber vorgenannten Halogensubstituenten reaktiv sind, in aprotischen polaren Lösungsmitteln in Gegenwart von wasserfreiem Alkalicarbonat, insbesondere Natrium-, Kalium-, Calciumcarbonat oder Mischungen davon, wobei Kaliumcarbonat ganz besonders bevorzugt ist. Eine besonders geeignete Kombination ist N-Methylpyrrolidon als Lösungsmittel und Kaliumcarbonat als Base.

Vorzugsweise weisen die Polyarylenether entweder Halogenendgruppen, insbesondere Chlorendgruppen, oder veretherte Endgruppen, insbesondere Alkyletherendgruppen, auf, welche durch Umsetzung der OH- bzw. Phenolat-Endgruppen mit geeigneten Veretherungsmitteln erhältlich sind.

Geeignete Veretherungsmittel sind beispielsweise monofunktionelles Alkyl- oder Arylhalogenid, beispielsweise C₁-C₆-Alkylchlorid, -bromid oder -iodid, bevorzugt Methylchlorid, oder Benzylchlorid, -bromid oder -iodid oder Mischungen davon. Bevorzugte Endgruppen im Rahmen der Polyarylenether der Komponente (A) sind Halogen, insbesondere Chlor, Alkoxy, insbesondere Methoxy, Aryloxy, insbesondere Phenoxy, oder Benzyloxy.

### Komponente B

Die erfindungsgemäßen Formmassen enthalten als Komponente (B) mindestens ein Polyarylensulfid. Als Komponente (B) kommen prinzipiell alle Polyarylensulfide in Betracht.

Vorzugsweise bestehen die Polyarylensulfide der Komponente (B) von 30 bis 100 Gew.-% aus Wiederholungseinheiten gemäß der allgemeinen Formel -Ar-S-, wobei - Ar- eine Arylengruppe mit 6 bis 18 Kohlenstoffatomen darstellt.

Bevorzugt werden Polyarylensulfide, die mindestens 30 Gew.-%, insbesondere mindestens 70 Gew.-% Wiederholungseinheiten III:

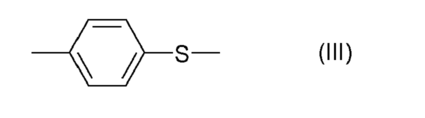

Bezogen auf das Gesamtgewicht aller Wiederholungseinheiten enthalten. Geeignete weitere Wiederholungseinheiten sind insbesondere 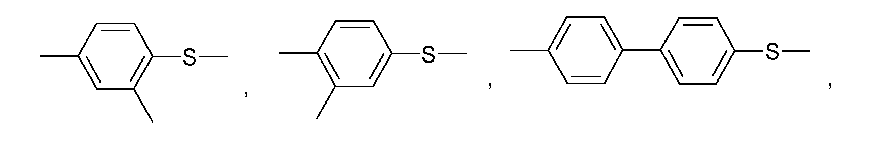 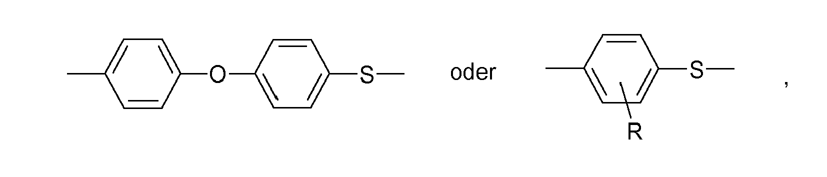 worin R C₁- bis C₁₀-Alkyl, bevorzugt Methyl bedeutet. Die Polyarylensulfide können Homopolymere, statistische Copolymere oder Blockcopolymere sein, wobei Homopolymere (identische Wiederholungseinheiten) bevorzugt sind. Ganz besonders bevorzugte Polyarylensulfide bestehen zu 100 Gew.-% aus Wiederholungseinheiten gemäß der allgemeinen Formel III. Besonders bevorzugt ist Komponente (B) somit ein Polyphenylensulfid, insbesondere Poly(1,4-phenylensulfid).

Als Endgruppen der erfindungsgemäß verwendeten Polyarylensulfide kommen insbesondere Halogen, Thiol oder Hydroxy, bevorzugt Halogen in Betracht.

Die Polyarylensulfide der Komponente (B) können verzweigt oder unverzweigt sein. Vorzugsweise sind die Polyarylensulfide der Komponente (B) linear, d. h. nicht verzweigt.

Die Polyarylensulfide der Komponente (B) weisen vorzugsweise gewichtsmittlere Molekulargewichte von 5.000 bis 100.000 g/mol auf.

Die scheinbare Viskosität der Komponente (B) beträgt bei 350°C und einer Scherrate von 1150 s⁻¹ vorzugsweise von 25 bis 200 Pa*s, insbesondere von 30 bis 150 Pa*s, besonders bevorzugt von 40 bis 130 Pa*s, ganz besonders bevorzugt von 50 bis 120 Pa*s.

Derartige Polyarylensulfide sind an sich bekannt oder können nach bekannten Methoden hergestellt werden. Entsprechende Herstellungsmethoden sind beispielsweise in Hans R. Krichelsdorf, ,,Aromatic Polyethers" in: Handbook of Polymer Synthesis, second edition, 2005 auf den Seiten 486 bis 492 beschrieben.

Insbesondere können sie, wie in der US 2,513,188 beschrieben, durch Umsetzen von Halogenaromaten mit Schwefel oder Metallsulfiden hergestellt werden. Ebenso ist es möglich, Metallsalze von mit Halogen substituierten Thiophenolen zu erhitzen (siehe GB-B 962 941). Zu den bevorzugten Synthesen von Polyarylensulfiden zählt die Umsetzung von Alkalimetallsulfiden mit Halogenaromaten in Lösung, wie sie z.B. der US 3,354,129 zu entnehmen ist. Weitere Verfahren sind in der US 3,699,087 und in der US 4,645,826 beschrieben.

Das erfindungsgemäße Verhältnis der scheinbaren Viskositäten führt in thermoplastischen Formmassen auf Basis von Polyarylenethern und Polyarylensulfiden enthaltend teilchen- oder faserförmige Füllstoffe zu den erfindungsgemäß verbesserten mechanischen Eigenschaften bei gleichzeitig guter Verarbeitbarkeit. Ohne sich einschränken zu wollen, besteht die Vorstellung, dass aufgrund des definierten Viskositätsverhältnisses eine feinteilige Dispergierung der jeweiligen Minoritätskomponente in der Matrix erfolgt beziehungsweise eine fein strukturierte co-kontinuierliche Struktur entsteht.

### Komponente C

Erfindungsgemäß können die thermoplastischen Formmassen mindestens einen funktionalisierten Polyarylenether umfassend Carboxylgruppen enthalten.

Vorzugsweise beträgt die Viskositätszahl gemäß DIN EN ISO 1628-1 der funktionalisierten Polyarylenether der Komponente (C) gemessen in 1 gew.-%iger Lösung in N-Methyl-2-pyrollidon bei 25°C mindestens 45 ml/g, besonders bevorzugt mindestens 46 ml/g, ganz besonders bevorzugt mindestens 47 ml/g, insbesondere mindestens 48 ml/g.

Die Verwendung von Polyarylenethern umfassend Carboxylgruppen mit einer Viskositätszahl gemäß DIN EN ISO 1628-1 von mehr als 65 ml/g gemessen in 1 gew.-%iger Lösung in N-Methyl-2-pyrollidon bei 25°C führt zu einer nachteiligen Reduktion der Fließfähigkeit, ohne dass eine weitere Verbesserung der mechanischen Eigenschaften erhalten wird. Dementsprechend ist die Viskositätszahl gemäß DIN EN ISO 1628-1 der Polyarylenether der Komponente (C) vorzugsweise nach oben beschränkt und beträgt bevorzugt höchstens 65 ml/g, besonders bevorzugt höchstens 61 ml/g, insbesondere höchstens 57 ml/g, jeweils gemessen in 1 gew.-%iger Lösung in N-Methyl-2-pyrollidon bei 25°C.

Vorzugsweise enthalten die erfindungsgemäßen thermoplastischen Formmassen als Komponente (C) mindestens einen funktionalisierten Polyarylenether, der Bausteine der allgemeinen Formel I wie oben definiert sowie Bausteine der allgemeinen Formel II enthält: 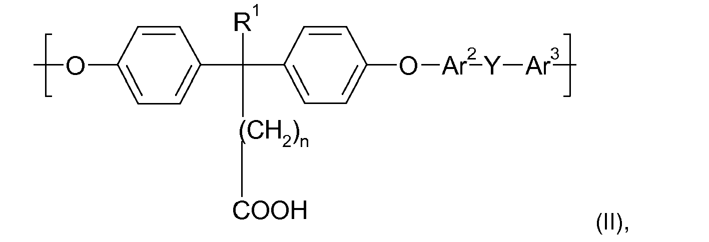 worin
- n: 0, 1, 2, 3, 4, 5 oder 6 ist;
- R¹: Wasserstoff, eine C₁ bis C₆-Alkylgruppe, oder -(CH₂)ₙ-COOH bedeutet;
- Ar² und Ar³: gleich oder unterschiedlich sein können und unabhängig voneinander eine C₆ bis C₁₈-Arylengruppe darstellen und
- Y: eine chemische Bindung oder Gruppe wiedergibt, die ausgewählt ist aus -O-, -S-, -SO₂-, S=O, C=O, -N=N- und -CR^{a}R^{b}-, wobei R^{a} und R^{b} gleich oder ungleich sein können und unabhängig voneinander jeweils für ein Wasserstoffatom oder eine C₁-C₁₂-Alkyl-, C₁-C₁₂-Alkoxy- oder C₆ bis C₁₈₋ Arylgruppe stehen.

Vorzugsweise beträgt der Anteil von Bausteinen gemäß der allgemeinen Formel II bezogen auf die Summe der Bausteine gemäß Formel I und Formel II von 0,5 bis 3 mol-%, vorzugsweise von 0,6 bis 2 mol-%, besonders bevorzugt von 0,7 bis 1,5 mol-%. Der Anteil von Bausteinen gemäß der allgemeinen Formel II bezogen auf die Summe der Bausteine gemäß Formel I und Formel II wird im Rahmen der vorliegenden Erfindung grundsätzlich mittels ¹H-NMR-Spektroskopie mit einer definierten Menge 1,3,5-Trimethoxybenzol als interner Standard bestimmt. Die Umrechnung von Gew.-% in mol-% ist dem Fachmann bekannt.

Im Rahmen der allgemeinen Formel II gilt vorzugsweise n = 2 und R¹ = Methyl.

Im Rahmen der allgemeinen Formel II gilt zudem vorzugsweise Ar² = Ar³ = 1,4-Phenylen und Y = -SO₂-.

Die in den erfindungsgemäßen Formmassen verwendeten, funktionalisierten Polyarylenether (Komponente C) sind an sich bekannte Verbindungen oder sind nach bekannten Verfahren herstellbar.

Beispielsweise sind die funktionalisierten Polyarylenether der Komponente (C) zugänglich in Anlehnung an die EP-A-0 185 237 sowie nach den von I.W. Parsons et al., in Polymer, 34, 2836 (1993) und T. Koch, H. Ritter, in Macromol. Phys. 195, 1709 (1994) beschriebenen Verfahren.

Die Polyarylenether sind demnach insbesondere erhältlich durch Polykondensation von Verbindungen der allgemeinen Formel IV: 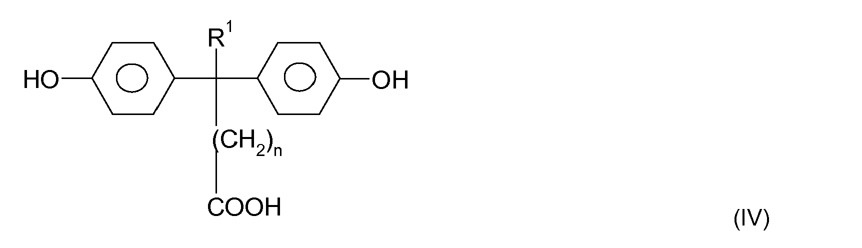 worin R¹ und n die oben angegebenen Bedeutungen besitzen, mit wenigstens einer weiteren gegenüber den Verbindungen der allgemeinen Formel IV reaktiven aromatischen Verbindung, wie insbesondere 4,4'-Dichlordiphenylsulfon, und gegebenenfalls weiteren hydroxyfunktionalisierten Verbindungen, wie z.B. Bisphenol A und/oder Bisphenol S und/oder 4,4'-Dihydroxybiphenyl. Geeignete Reaktionspartner sind dem Fachmann allgemein bekannt.

Zur Herstellung der funktionalisierten Polyarylenether der Komponente (C) können prinzipiell auch die für Polyarylenether der Komponente (A) verwendeten Methoden eingesetzt werden, wobei ebenfalls die Lösungspolymerisation in dipolar aprotischen Lösungsmitteln unter Baseneinwirkung bevorzugt wird.

Die Ausführungen bezüglich Komponente (A) hinsichtlich bevorzugter Strukturelemente der allgemeinen Formel I gelten entsprechend für die funktionalisierten Polyarylenether der Komponente (C).

Insbesondere ist es bevorzugt, wenn die Polyarylenether der Komponenten (A) und (C) strukturell ähnlich sind, insbesondere auf den gleichen Monomerbausteinen basieren und sich lediglich in Bezug auf die Bausteine der allgemeinen Formel II im Rahmen der Komponente (C) unterscheiden. Es ist besonders bevorzugt, wenn sowohl Komponente (A) als auch Komponente (C) auf Bausteinen des Typs PESU wie oben definiert oder wenn sowohl Komponente (A) als auch Komponente (C) auf Bausteinen des Typs PPSU wie oben definiert oder wenn sowohl Komponente (A) als auch Komponente (C) auf Bausteinen des Typs PSU wie oben definiert basieren. Unter "basieren" ist in diesem Zusammenhang zu verstehen, dass sowohl Komponente (A) als auch Komponente (C) aus den gleichen Bausteinen aufgebaut sind und sich lediglich dadurch unterscheiden, dass die Komponente (C) zusätzlich funktionalisiert ist und vorzugsweise Monomerbausteine der allgemeinen Formel II wie oben definiert enthält. Besonders bevorzugt enthalten die Polyarylenether der Komponente (A) und die funktionalisierten Polyarylenether der Komponente (C) jeweils die gleichen Bausteine der allgemeinen Formel I.

Geeignete Bausteine im Rahmen der allgemeinen Formel II sind insbesondere: 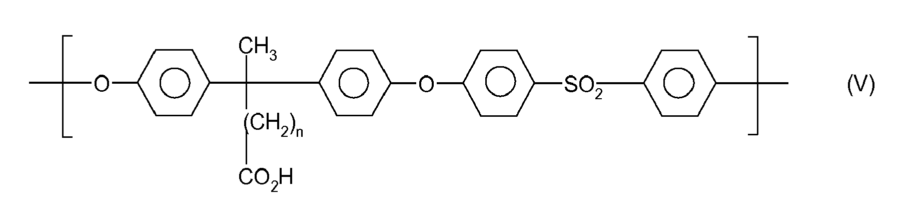 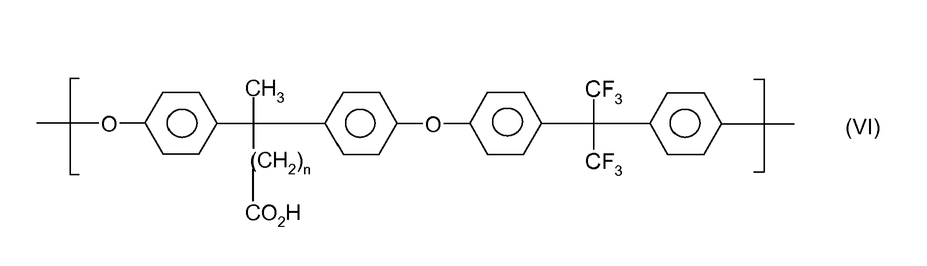 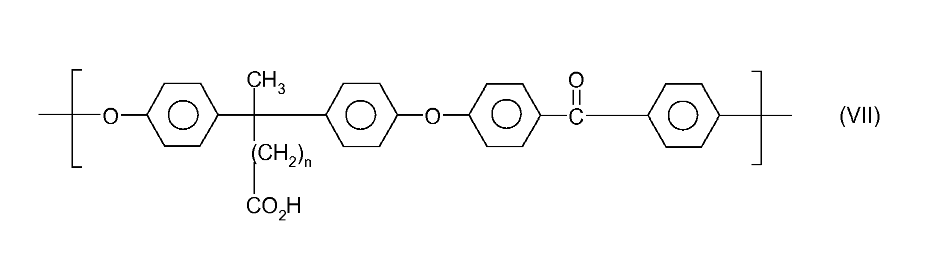 worin n jeweils für eine ganze Zahl von 0 bis 4 steht. Baustein V ist ganz besonders bevorzugt.

### Komponente D

Die thermoplastischen Formmassen der vorliegenden Erfindung enthalten als Komponente (D) mindestens einen faser- oder teilchenförmigen Füllstoff, vorzugsweise in einer Menge von 15 bis 70 Gew.-%, besonders bevorzugt von 20 bis 70 Gew.-%, insbesondere von 25 bis 65 Gew.-%, bezogen auf insgesamt 100 Gew.-% der Komponenten (A) bis (E).

Die erfindungsgemäßen Formmassen können insbesondere teilchenförmige oder faserförmige Füllstoffe enthalten, wobei faserförmige Füllstoffe besonders bevorzugt sind.

Bevorzugte faserförmige Füllstoffe sind Kohlenstofffasern, Kaliumtitanatwhisker, Aramidfasern und besonders bevorzugt Glasfasern. Bei der Verwendung von Glasfasern können diese zur besseren Verträglichkeit mit dem Matrixmaterial mit einer Schlichte, bevorzugt einer Polymethanschlichte und einem Haftvermittler ausgerüstet sein. Im Allgemeinen haben die verwendeten Kohlenstoff- und Glasfasern einen Durchmesser im Bereich von 6 bis 20 µm. Komponente (D) besteht somit besonders bevorzugt aus Glasfasern.

Die Einarbeitung der Glasfasern kann sowohl in Form von Kurzglasfasern als auch in Form von Endlossträngen (Rovings) erfolgen. Im fertigen Spritzgussteil liegt die mittlere Länge der Glasfasern vorzugsweise im Bereich von 0,08 bis 0,5 mm.

Kohlenstoff- oder Glasfasern können auch in Form von Geweben, Matten oder Glasseidenrovings eingesetzt werden.

Als teilchenförmige Füllstoffe eignen sich amorphe Kieselsäure, Carbonate wie Magnesiumcarbonat (Kreide), gepulverter Quarz, Glimmer, unterschiedlichste Silikate wie Tone, Muskovit, Biotit, Suzoit, Zinnmaletit, Talkum, Chlorit, Phlogophit, Feldspat, Calciumsilikate wie Wollastonit oder Aluminiumsilikate wie Kaolin, besonders kalzinierter Kaolin.

Bevorzugte teilchenförmige Füllstoffe sind solche, in denen mindestens 95 Gew.-%, bevorzugt mindestens 98 Gew.-% der Teilchen einen Durchmesser (größter Durchmesser durch das geometrische Zentrum), bestimmt am fertigen Produkt, von weniger als 45 µm, bevorzugt weniger als 40 µm aufweisen und deren so genanntes Aspektverhältnis im Bereich von 1 bis 25, bevorzugt im Bereich von 2 bis 20 liegt, bestimmt am fertigen Produkt. Das Aspektverhältnis ist das Verhältnis von Teilchendurchmesser zu Dicke (größte Ausdehnung zu kleinster Ausdehnung jeweils durch das geometrische Zentrum).

Die Teilchendurchmesser können dabei z. B. dadurch bestimmt werden, dass elektronenmikroskopische Aufnahmen von Dünnschnitten der Polymermischung aufgenommen und mindestens 25, bevorzugt mindestens 50 Füllstoffteilchen für die Auswertung herangezogen werden. Ebenso kann die Bestimmung der Teilchendurchmesser über Sedimentationsanalyse erfolgen, gemäß Transactions of ASAE, Seite 491 (1983). Der Gewichtsanteil der Füllstoffe, deren Durchmesser weniger als 40 µm beträgt, kann auch mittels Siebanalyse gemessen werden.

Besonders bevorzugt werden als teilchenförmige Füllstoffe Talkum, Kaolin, wie kalzinierter Kaolin oder Wollastonit oder Mischungen aus zwei oder allen dieser Füllstoffe. Darunter wird Talkum mit einem Anteil von mindestens 95 Gew.-% an Teilchen mit einem Durchmesser von kleiner als 40 µm und einem Aspektverhältnis von 1,5 bis 25, jeweils bestimmt am fertigen Produkt, besonders bevorzugt. Kaolin hat bevorzugt einen Anteil von mindestens 95 Gew.-% an Teilchen mit einem Durchmesser von kleiner als 20 µm und ein Aspektverhältnis von 1,2 bis 20, jeweils bestimmt am fertigen Produkt.

Die thermoplastischen Formmassen können außerdem weitere Zusatzstoffe und/oder verarbeitungshilfsmittel als Komponente E enthalten.

### Komponente E

Die erfindungsgemäßen Formmassen können als Bestandteile der Komponente (E) Hilfsstoffe, insbesondere Verarbeitungshilfsmittel, Pigmente, Stabilisatoren, Flammschutzmittel oder Mischungen unterschiedlicher Additive enthalten. Übliche Zusatzstoffe sind beispielsweise auch Oxidationsverzögerer, Mittel gegen Wärmezersetzung und Zersetzung durch ultraviolettes Licht, Gleit- und Entformungsmittel, Farbstoffe und Weichmacher.

Der Anteil der Komponente (E) in der erfindungsgemäßen Formmasse beträgt insbesondere von 0 bis zu 30, vorzugsweise von 0 bis zu 20 Gew.-%, insbesondere 0 bis 15 Gew.-%, bezogen auf das Gesamtgewicht der Komponenten (A) bis (E). Falls die Komponente E Stabilisatoren beinhaltet, beträgt der Anteil dieser Stabilisatoren üblicherweise bis zu 2 Gew.-%, vorzugsweise 0,01 bis 1 Gew.-%, insbesondere 0,01 bis 0,5 Gew.-%, bezogen auf die Summe der Gew.-% der Komponenten (A) bis (E).

Pigmente und Farbstoffe sind allgemein in Mengen von 0 bis 6, bevorzugt von 0,05 bis 5 und insbesondere von 0,1 bis 3 Gew.-%, bezogen auf die Summe der Gew.-% der Komponenten (A) bis (E), enthalten.

Die Pigmente zur Einfärbung von Thermoplasten sind allgemein bekannt, siehe zum Beispiel R. Gächter und H. Müller, Taschenbuch der Kunststoffadditive, Carl Hanser Verlag, 1983, Seiten 494 bis 510. Als erste bevorzugte Gruppe von Pigmenten sind Weißpigmente zu nennen, wie Zinkoxid, Zinksulfid, Bleiweiß [2 PbCO₃·Pb(OH)₂], Lithopone, Antimonweiß und Titandioxid. Von den beiden gebräuchlichsten Kristallmodifikationen (Rutil- und Anatas-Typ) des Titandioxids wird insbesondere die Rutilform zur Weißfärbung der erfindungsgemäßen Formmassen verwendet. Schwarze Farbpigmente, die erfindungsgemäß eingesetzt werden können, sind Eisenoxidschwarz (Fe₃O₄), Spinellschwarz [Cu(Cr, Fe)₂O₄], Manganschwarz (Mischung aus Mangandioxid, Siliciumdioxid und Eisenoxid), Kobaltschwarz und Antimonschwarz sowie besonders bevorzugt Ruß, der meist in Form von Furnace- oder Gasruß eingesetzt wird. Siehe hierzu G. Benzing, Pigmente für Anstrichmittel, Expert-Verlag (1988), Seiten 78 ff.

Zur Einstellung bestimmter Farbtöne können anorganische Buntpigmente, wie Chromoxidgrün oder organische Buntpigmente, wie Azopigmente oder Phthalocyanine eingesetzt werden. Derartige Pigmente sind dem Fachmann bekannt.

Oxidationsverzögerer und Wärmestabilisatoren, die den thermoplastischen Formmassen gemäß der Erfindung zugesetzt werden können, sind zum Beispiel Halogenide von Metallen der Gruppe I des Periodensystems, zum Beispiel Natrium-, Kalium-, Lithium-Halogenide, zum Beispiel Chloride, Bromide oder lodide. Weiterhin können Zinkfluorid und Zinkchlorid verwendet werden. Ferner sind sterisch gehinderte Phenole, Hydrochinone, substituierte Vertreter dieser Gruppe, sekundäre aromatische Amine, gegebenenfalls in Verbindung mit phosphorhaltigen Säuren bzw. deren Salze, und Mischungen dieser Verbindungen, vorzugsweise in Konzentrationen bis zu 1 Gew.-%, bezogen auf die Summe der Gew.-% der Komponenten (A) bis (E) einsetzbar.

Beispiele für UV-Stabilisatoren sind verschiedene substituierte Resorcine, Salicylate, Benzotriazole und Benzophenone, die im Allgemeinen in Mengen bis zu 2 Gew.-% eingesetzt werden.

Gleit- und Entformungsmittel, die in der Regel in Mengen bis zu 1 Gew.-% bezogen auf die Summe der Gew.-% der Komponenten (A) bis (E) zugesetzt werden, sind Stearylalkohol, Stearinsäurealkylester und -amide sowie Ester des Pentaerythrits mit langkettigen Fettsäuren. Es können auch Dialkylketone, zum Beispiel Distearylketon, eingesetzt werden.

Als bevorzugten Bestandteil enthalten die erfindungsgemäßen Formmassen von 0,1 bis 2, bevorzugt 0,1 bis 1,75, besonders bevorzugt 0,1 bis 1,5 Gew.-% und insbesondere von 0,1 bis 0,9 Gew.-% (bezogen auf die Summe der Gew.-% der Komponenten (A) bis (E)) an Stearinsäure und/oder Stearaten. Im Prinzip können auch andere Stearinsäurederivate wie Ester der Stearinsäure eingesetzt werden.

Stearinsäure wird bevorzugt durch Hydrolyse von Fetten hergestellt. Die dabei erhaltenen Produkte stellen üblicherweise Mischungen aus Stearinsäure und Palmitinsäure dar. Daher haben solche Produkte einen breiten Erweichungsbereich, zum Beispiel von 50 bis 70 °C, je nach Zusammensetzung des Produkts. Bevorzugt werden Produkte mit einem Anteil an Stearinsäure von mehr als 20, besonders bevorzugt mehr als 25 Gew.-% verwendet. Es kann auch reine Stearinsäure (> 98 %) verwendet werden.

Des Weiteren kann Komponente (E) auch Stearate beinhalten. Stearate können entweder durch Umsetzung entsprechender Natriumsalze mit Metallsalzlösungen (zum Beispiel CaCl₂, MgCl₂, Aluminiumsalze) oder durch direkte Umsetzung der Fettsäure mit Metallhydroxid hergestellt werden (siehe zum Beispiel Baerlocher Additives, 2005). Bevorzugt wird Aluminiumtristearat verwendet.

Als weitere Zusatzstoffe kommen auch so genannte Nukleierungsmittel, wie beispielsweise Talkum, in Betracht.

Die Reihenfolge, in der die Komponenten (A) bis (E) gemischt werden, ist beliebig.

Die erfindungsgemäßen Formmassen können nach an sich bekannten Verfahren, beispielsweise Extrusion, hergestellt werden. Die erfindungsgemäßen Formmassen können z.B. hergestellt werden, indem man die Ausgangskomponenten in üblichen Mischvorrichtungen wie Schneckenextruder, vorzugsweise Zweischneckenextruder, Brabender-Mischer, Banbury-Mischer oder Kneter mischt und anschließend extrudiert. Nach der Extrusion wird das Extrudat abgekühlt und zerkleinert. Die Reihenfolge der Mischung der Komponenten kann variiert werden. Entsprechend können zwei oder mehr als zwei Komponenten vorgemischt werden, es können aber auch alle Komponenten gemeinsam gemischt werden.

Um eine möglichst homogene Mischung zu erhalten, ist eine intensive Durchmischung vorteilhaft. Dazu sind im Allgemeinen mittlere Mischzeiten von 0,2 bis 30 Minuten bei Temperaturen von 290 bis 380°C, bevorzugt 300 bis 370°C, erforderlich. Nach der Extrusion wird das Extrudat in der Regel abgekühlt und zerkleinert.

Die erfindungsgemäßen thermoplastischen Formmassen können vorteilhaft zur Herstellung von Formteilen verwendet werden. Die erfindungsgemäßen Formmassen eignen sich insbesondere zur Herstellung von Formteilen für Haushaltsartikel, elektrische oder elektronische Bauteile sowie zur Herstellung von Formteilen für den Fahrzeugsektor, insbesondere Automobil.

Die folgenden Beispiele erläutern die Erfindung näher, ohne sie einzuschränken.

### Beispiele

Die E-Moduli, die Reißfestigkeit und die Reißdehnung der Proben wurden im Zugversuch nach ISO 527 an Schulterstäben ermittelt.

Die Schlagzähigkeit der Produkte wurde an ISO-Stäben nach ISO 179 1 eU bestimmt.

Die Fließfähigkeit wurde anhand der Schmelzeviskosität beurteilt. Die Schmelzestabilität wurde mittels eines Kapillarrheometers bestimmt. Dabei wurde die scheinbare Viskosität der Schmelze bei 350°C als Funktion der Scherrate in einem Kapillarviskosimeter (Göttfert Kapillarviskosimeter Rheograph 2003) mit einer Kreiskapillare der Länge 30 mm und einem Radius von 0,5 mm, einem Einlaufwinkel der Düse von 180°, einem Durchmesser des Reservoirgefäßes der Schmelze von 12 mm und mit einer Vorheizzeit von 5 Minuten bestimmt.

Die Viskositätszahl der Polyarylenether wurde in 1 gew.-%iger Lösung in N-Methylpyrrolidon bei 25°C gemäß DIN EN ISO 1628-1 bestimmt.

Die Beständigkeit gegenüber FAM B wurde bestimmt, indem ISO-Stäbe der Größe 80x40x4 mm sieben Tage bei 60°C in FAm B gelagert wurden. Anschließend wurden die Stäbe zur Ablüftung liegen gelassen, dann 1 Tag bei Vakuum und Raumtemperatur gelagert und anschließend 2 Tage im Vakuum bei 100°C. Anschließend wurde die Schlagzähigkeit gemäß ISO 179 1eU bestimmt.

### Komponente A

Als Komponente A wurde ein Polyethersulfon mit einer Viskositätszahl von 55,4 ml/g (Ultrason® E 2010 der BASF SE) verwendet. Das verwendete Produkt wies 0,12 Gew.-% Cl-Endgruppen und 0,18 Gew.-% OCH₃-Endgruppen auf. Die bei 350°C/1150 s⁻¹ bestimmte scheinbare Schmelzeviskosität betrug 514 Pa*s.

Als Komponente A2 wurde ein Polyethersulfon mit einer Viskositätszahl von 49,0 ml/g (Ultrason® E 1010 der BASF SE) verwendet. Das verwendete Produkt wies 0,19 Gew.-% CI-Endgruppen und 0,23 Gew.-% OCH₃-Endgruppen auf. Die bei 350°C/1150 s⁻¹ bestimmte scheinbare Schmelzeviskosität betrug 263 Pa*s.

Als Komponente A3 wurde ein Polyethersulfon mit einer Viskositätszahl von 44,0 ml/g verwendet. Das verwendete Produkt wies 0,21 Gew.-% Cl-Endgruppen und 0,33 Gew.-% OCH₃-Endgruppen auf. Die bei 350°C/1150 s⁻¹ bestimmte scheinbare Schmelzeviskosität betrug 134 Pa*s.

### Komponente B

Als Komponente B1 wurde ein Poly-(1,4-phenylensulfid) mit einer Schmelzeviskosität von 76 Pa*s bestimmt bei 350°C und einer Scherrate von 1150 s⁻¹ verwendet.

Als Komponente B2 wurde ein Poly-(1,4-phenylensulfid) mit einer Schmelzeviskosität von 68 Pa*s bestimmt bei 350°C und einer Scherrate von 1150 s⁻¹ verwendet.

Als Komponente B3 wurde ein Poly-(1,4-phenylensulfid) mit einer Schmelzeviskosität von 14 Pa*s bestimmt bei 350°C und einer Scherrate von 1150 s⁻¹ verwendet.

### Komponente C

Als Komponente C1 wurde ein funktionalisiertes Polyethersulfon verwendet, welches wie folgt hergestellt wurde:
Unter Stickstoffatmosphäre wurden 577,03 g Dichlordiphenylsulfon, 495,34 Dihydroxydiphenylsulfon und 5,73 g 4,4'-Bis-hydroxyphenylvaleriansäure ("DPA") in 1053 ml NMP gelöst und mit 297,15 g wasserfreiem Kaliumkarbonat versetzt. Die Reaktionsmischung wurde auf 190°C erhitzt und 6 h bei dieser Temperatur gehalten. Anschließend wurde der Ansatz mit 1947 ml NMP verdünnt. Nach Abkühlen auf T < 80°C wurde die Suspension abgelassen. Durch Filtration wurden dann die unlöslichen Bestandteile abgetrennt. Die erhaltene Lösung wurde dann in Wasser gefällt. Das erhaltene weiße Pulver wurde dann mehrfach mit heißem Wasser extrahiert und anschließend bei 140°C im Vakuum getrocknet. Der Anteil an DPA-Einheiten wurde mittels ¹H-NMR-Spektroskopie mit 1,3,5-Trimethoxybenzol als internem Standard zu 0,9 mol-% bestimmt, die Viskositätszahl des Produkts war 46,9 ml/g.

### Komponente D

Als Komponente Dl wurden Schnittglasfasern mit einer Stapellänge von 4,5 mm und einem Faserdurchmesser von 10 µm eingesetzt, die mit einer Polyurethanschlichte versehen waren.

**Tabelle 1: Eigenschaften der Blends aus Polyarylenethern und Polyarylensulfiden. Die Zusammensetzung der thermoplastischen Formmassen ist in Gewichtsteilen angegeben.**

| Versuch | V1 | V2 | V3 | V4 | 5 | 6 | 7 | 8 |
|---|---|---|---|---|---|---|---|---|
| Komponente A1 | 36 | 31 | 27,5 | 24 | - | - | - | - |
| Komponente A2 | - | - | - | - | 36 | 31 | 27,5 | 24 |
| Komponente A3 | - | - | - | - | - | - | - | - |
| Komponente B1 | 19 | 24 | 27,5 | 31 | 19 | 24 | 27,5 | 31 |
| Komponente B2 | - | - | - | - | - | - | - | - |
| Komponente B3 | - | - | - | - | - | - | - | - |
| Komponente C1 | - | - | - | - | - | - | - | - |
| Komponente D | 45 | 45 | 45 | 45 | 45 | 45 | 45 | 45 |
| E-Modul [GPa] | 16,9 | 17,3 | 17,4 | 17,5 | 16,8 | 17,2 | 17,3 | 17,4 |
| Reißdehnung [%] | 1,3 | 1,4 | 1,3 | 1,3 | 1,4 | 1,4 | 1,5 | 1,5 |
| Reißfestigkeit [MPa] | 132 | 144 | 142 | 145 | 154 | 154 | 167 | 173 |
| ISO 179 1eU [kJ/m²] | 37 | 36 | 34 | 35 | 36 | 36 | 38 | 39 |
| Viskosität bei 1000 s⁻¹ (350°C) | 681 | 640 | 630 | 625 | 481 | 453 | 445 | 432 |
| ISO 179 1eU [kJ/m²] nach Lagerung in FAM B | 16 | 17 | 16 | 16 | 21 | 24 | 26 | 28 |

**Tabelle 1 (Fortsetzung):**

| Versuch | V9 | V10 | V11 | V12 | V13 | V14 | 15 |
|---|---|---|---|---|---|---|---|
| Komponente A1 | - | - | - | - | - | - | - |
| Komponente A2 | - | - | - | - | 27,5 | 27,5 | 22,5 |
| Komponente A3 | 36 | 31 | 27,5 | 24 | - | - | - |
| Komponente B1 | 19 | 24 | 27,5 | 31 | - | - | 27,5 |
| Komponente B2 | - | - | - | - | 27,5 | - | - |
| Komponente B3 | - | - | - | - | - | 27,5 | - |
| Komponente C1 | - | - | - | - | - | - | 5 |
| Komponente D | 45 | 45 | 45 | 45 | 45 | 45 | 45 |
| E-Modul [GPa] | 16,7 | 17,1 | 17,3 | 17,2 | 16,8 | 17,1 | 17,2 |
| Reißdehnung [%] | 0,9 | 0,8 | 0,8 | 0,7 | 1,2 | 1,0 | 1,9 |
| Reißfestigkeit [MPa] | 126 | 128 | 124 | 131 | 142 | 139 | 175 |
| ISO 179 1eU [kJ/m²] | 29 | 31 | 30 | 29 | 32 | 29 | 45 |
| Viskosität bei 1000 s⁻¹ (350°C) | 378 | 367 | 356 | 345 | 410 | 389 | 439 |
| ISO 179 1eU [kJ/m²] nach Lagerung in FAM B | 12 | 14 | 13 | 13 | 15 | 11 | 32 |

Die erfindungsgemäßen Formmassen zeichnen sich durch eine hohe Fließfähigkeit, eine hohe Festigkeit und hohe Zähigkeit aus. Überraschenderweise weisen die erfindungsgemäßen Formmassen auch eine verbesserte Beständigkeit gegenüber FAM B auf.

## Patentansprüche

1. Thermoplastische Formmassen enthaltend folgende Komponenten:
(A) mindestens einen Polyarylenether,
(B) mindestens ein Polyarylensulfid,
(C) optional mindestens einen funktionalisierten Polyarylenether umfassend Carboxylgruppen,
(D) mindestens einen faser- oder teilchenförmigen Füllstoff und
(E) optional weitere Zusatzstoffe und/oder Verarbeitungshilfsmittel,
wobei das Verhältnis der scheinbaren Viskosität der Komponente (A) zu dem der Komponente (B) von 2,5 bis 3,7 beträgt.

2. Thermoplastische Formmassen nach Anspruch 1, wobei das Verhältnis der scheinbaren Viskosität der Komponente (A) zu dem der Komponente (B) von 2,6 bis 3,5 beträgt.

3. Thermoplastische Formmassen nach Anspruch 1 oder 2, enthaltend von 15 bis 80 Gew.-% der Komponente (A), von 5 bis 70 Gew.-% der Komponente (B), von 0 bis 15 Gew.-% der Komponente (C), von 15 bis 70 Gew.-% der Komponente (D) und von 0 bis 40 Gew.-% der Komponente (E), wobei die Summe der Gew.-% der Komponenten (A) bis (E) 100 Gew.-% beträgt.

4. Thermoplastische Formmassen nach den Ansprüchen 1 bis 3, wobei die Polyarylenether der Komponente (A) aufgebaut sind aus Bausteinen der allgemeinen Formel I: 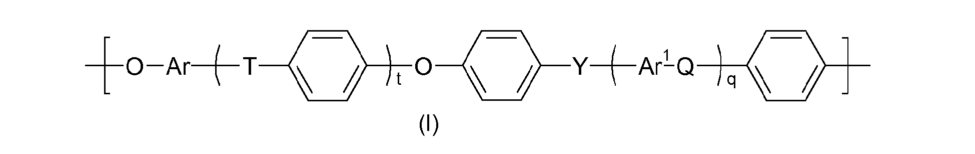 wobei die Symbole t, q, Q, T, Y, Ar und Ar¹ folgenden Bedeutungen aufweisen:
t, q: unabhängig voneinander 0, 1, 2 oder 3,
Q, T, Y: unabhängig voneinander jeweils eine chemische Bindung oder Gruppe, ausgewählt aus -O-, -S-, -SO₂-, S=O, C=O, -N=N- und -CR^{a}R^{b}-, wobei R^{a} und R^{b} gleich oder unterschiedlich sein können und unabhängig voneinander jeweils für ein Wasserstoffatom oder eine C₁-C₁₂-Alkyl-, C₁-C₁₂-Alkoxy- oder C₆-C₁₈-Arylgruppe stehen, und wobei wenigstens eines aus Q, T und Y für -SO₂- steht und
Ar, Ar¹: unabhängig voneinander eine Arylengruppe mit von 6 bis 18 Kohlenstoffatomen.

5. Thermoplastische Formmassen nach Anspruch 4, wobei Q, T und Y in Formel I unabhängig voneinander ausgewählt sind aus -O- und -SO₂- und wenigstens eines aus Q, T und Y für -SO₂- steht.

6. Thermoplastische Formmassen nach den Ansprüchen 4 oder 5, wobei Ar und Ar¹ in Formel I unabhängig voneinander ausgewählt sind aus der Gruppe bestehend aus 1,4-Phenylen, 1,3-Phenylen, Naphthylen und 4,4'-Bisphenylen.

7. Thermoplastische Formmassen nach den Ansprüchen 4 bis 6 enthaltend einen funktionalisierten Polyarylenether umfassend Carboxylgruppen, wobei der funktionalisierte Polyarylenether umfassend Carboxylgruppen Bausteine der allgemeinen Formel I sowie Bausteine der allgemeinen Formel II enthält: 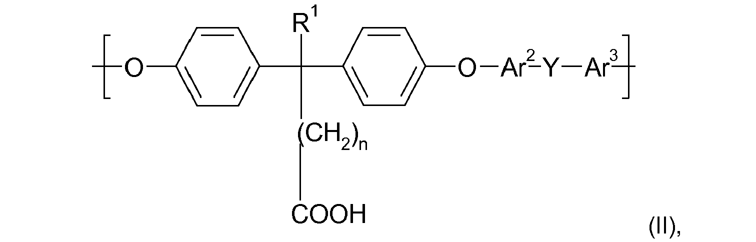 worin
n = 0, 1, 2, 3, 4, 5 oder 6 ist,
R¹ Wasserstoff, eine C₁ bis C₆-Alkylgruppe, oder -(CH₂)ₙ-COOH bedeutet,
Ar² und Ar³ gleich oder unterschiedlich sein können und unabhängig von einander eine C₆ bis C₁₈-Arylengruppe darstellen und
Y eine chemische Bindung oder Gruppe wiedergibt, ausgewählt aus -O-, - S-, -SO₂-, S=O, C=O, -N=N- und -CR^{a}R^{b}-, wobei R^{a} und R^{b} gleich oder unterschiedlich sein können und unabhängig voneinander jeweils für ein Wasserstoffatom oder eine C₁-C₁₂-Alkyl-, C₁-C₁₂-Alkoxy- oder C₆-C₁₈-Arylgruppe stehen.

8. Thermoplastische Formmassen nach Anspruch 7, wobei der Anteil von Bausteinen gemäß der allgemeinen Formel II bezogen auf die Summe der Bausteine gemäß Formel I und Formel II von 0,5 bis 3 mol-% beträgt, vorzugsweise von 0,6 bis 2 mol-%.

9. Thermoplastische Formmassen nach den Ansprüchen 7 oder 8, wobei die Viskositätszahl nach DIN EN ISO 1628-1 der funktionalisierten Polyarylenether der Komponente (C) gemessen in 1 gew.-%iger Lösung in N-Methyl-2-pyrollidon bei 25°C von 45 bis 65 ml/g beträgt.

10. Thermoplastische Formmassen nach den Ansprüchen 7 bis 9, wobei Ar² und Ar³
= 1,4-Phenylen und Y = SO₂ ist.

11. Thermoplastische Formmassen nach den Ansprüchen 1 bis 10, wobei die Polyarylensulfide der Komponente (B) von 30 bis 100 Gew.-% aus Wiederholungseinheiten gemäß der allgemeinen Formel -Ar-S- aufgebaut sind, wobei Ar eine Arylengruppe mit 6 bis 18 Kohlenstoffatomen darstellt.

12. Thermoplastische Formmassen nach den Ansprüchen 1 bis 11, wobei Komponente (B) Polyphenylensulfid, vorzugsweise Poly(1,4-phenylensulfid) ist.

13. Thermoplastische Formmassen nach den Ansprüchen 1 bis 12, wobei Komponente (D) aus Glasfasern besteht.

14. Verfahren zur Herstellung von thermoplastischen Formmassen gemäß den Ansprüchen 1 bis 13 umfassend das Vermischen der eingesetzten Komponenten bei erhöhter Temperatur.

15. Verwendung von thermoplastischen Formmassen gemäß den Ansprüchen 1 bis 13 zur Herstellung von Formteilen.
